(19) **Europäisches Patentamt / European Patent Office / Office européen des brevets**

(11) **EP 4 546 197 A1**

(12) **EUROPEAN PATENT APPLICATION**
published in accordance with Art. 153(4) EPC

(43) Date of publication:
**30.04.2025 Bulletin 2025/18**

(21) Application number: **23827123.3**

(22) Date of filing: **16.06.2023**

(51) International Patent Classification (IPC):
***G06F 30/10*** (2020.01)

(52) Cooperative Patent Classification (CPC):
**G06F 30/10; G06F 30/20**

(86) International application number:
**PCT/JP2023/022357**

(87) International publication number:
**WO 2023/248938 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022 JP 2022099354**

(71) Applicant: **Nature Architects Inc.**
**Tokyo 107-0052 (JP)**

(72) Inventors:
• **SUTO Kai**
**Tokyo 107-0052 (JP)**
• **SHINTANI Kunitaka**
**Tokyo 107-0052 (JP)**

(74) Representative: **Tiburzi, Andrea et al**
**Barzanò & Zanardo Roma S.p.A.**
**Via Piemonte 26**
**00187 Roma (IT)**

(54) **DESIGN ASSISTANCE APPARATUS AND METHOD**

(57)     An embodiment of the present disclosure provides a design assistance apparatus 100 for designing a structure including a partition wall structure that separates a plurality of different flow paths from each other. The apparatus 100 includes a control unit (processor) 130 configured to execute: acquiring design space information that specifies a design space of the structure; acquiring flow path characteristic shape information that specifies a characteristic shape of each flow path to be formed within the design space, the flow path characteristic shape information being identified by a line or a surface; and generating a boundary surface that separates the plurality of flow paths from each other within the design space, based on the design space information and the flow path characteristic shape information.

FIG. 1

## Description

Technical Field

The present disclosure relates to a design assistance apparatus and method, and more particularly to a design assistance apparatus and method for designing a structure including a desired flow path configuration.

Background Art

Patent Literatures (PTLS) 1 and 2 disclose heat exchangers including two flow paths separated from each other by various periodic minimal surfaces. According to the structures disclosed in PTLS 1 and 2, it is possible to improve heat exchange efficiency by using a periodic minimal surface for a partition wall that separates the two flow paths to increase the specific surface area of the partition wall.

Citation List

Patent Literature

PTL 1
U.S. Patent Application Publication No. 2020/0033070
PTL 2
U.S. Patent No. 10,704,841

Summary of Invention

Technical Problem

It is possible to design various structures by forming flow paths of a heat exchanger based on various periodic minimal surfaces. On the other hand, such structures depend on the shape of each periodic minimal surface, and thus structures that can be designed are limited to the type of the periodic minimal surface, thereby resulting in a low degree of freedom in designing of a flow path configuration.

Further, it is also possible to generate a structure having fluid characteristics different from those of an original structure formed based on a certain periodic minimal surface, by deforming the original structure using a topology optimization method. However, the basic configuration of flow paths of this structure also depends on the original periodic minimal surface, and thus this method cannot achieve a high degree of freedom in designing a desired structure.

An object of the present disclosure is to provide a design assistance apparatus and method capable of easily designing a desired flow path configuration.

Solution to Problem

An aspect of the present disclosure provides a design assistance apparatus for designing a structure including a partition wall structure that separates a plurality of flow paths from each other. This design assistance apparatus includes a processor configured to execute: acquiring design space information that specifies a design space of the structure; acquiring flow path characteristic shape information that specifies a characteristic shape of each flow path to be formed within the design space, the flow path characteristic shape information being identified by a line or a surface; and generating a boundary surface that separates the plurality of flow paths from each other within the design space, based on the design space information and the flow path characteristic shape information.

Other features and advantages of the present disclosure will be understood from the following description and the accompanying drawings, given illustratively and non-comprehensively.

Brief Description of Drawings

FIG. 1 is a functional block diagram of a design assistance apparatus according to an embodiment of the present disclosure;

FIG. 2 is a flowchart illustrating a design assistance method for a structure using the design assistance apparatus according to the embodiment;

FIG. 3 is a flowchart illustrating an example of the processing executed in step S10 in the flowchart illustrated in FIG. 2;

FIG. 4 is a diagram illustrating examples of geometric shapes specified as respective design requirements in the embodiment;

FIG. 5 is a flowchart illustrating an example of the processing executed in step S30 in the flowchart illustrated in FIG. 2;

FIG. 6A is a diagram illustrating configurations relating to a structure generated in the embodiment;

FIG. 6B is a diagram illustrating configurations relating to the structure generated in the embodiment;

FIG. 7A is a diagram illustrating examples of the geometric shape specified as each design requirement in Example 1;

FIG. 7B is a diagram illustrating configurations relating to the structure generated in Example 1;

FIG. 8A is a diagram illustrating examples of the geometric shape specified as each design requirement in Example 2;

FIG. 8B is a diagram illustrating configurations relating to the structure generated in Example 2;

FIG. 9A is a diagram illustrating examples of the geometric shape specified as each design requirement in Example 3;

FIG. 9B is a diagram illustrating configurations relating to the structure generated in Example 3;

FIG. 10A is a diagram illustrating examples of the geometric shape specified as each design requirement in Example 4;

FIG. 10B is a diagram illustrating configurations of the structure generated in Example 4; and

FIG. 11 is a flowchart illustrating a method for manufacturing a structure.

Description of Embodiments

First, an overview of a design assistance apparatus for a structure according to an embodiment of the present disclosure will be described.

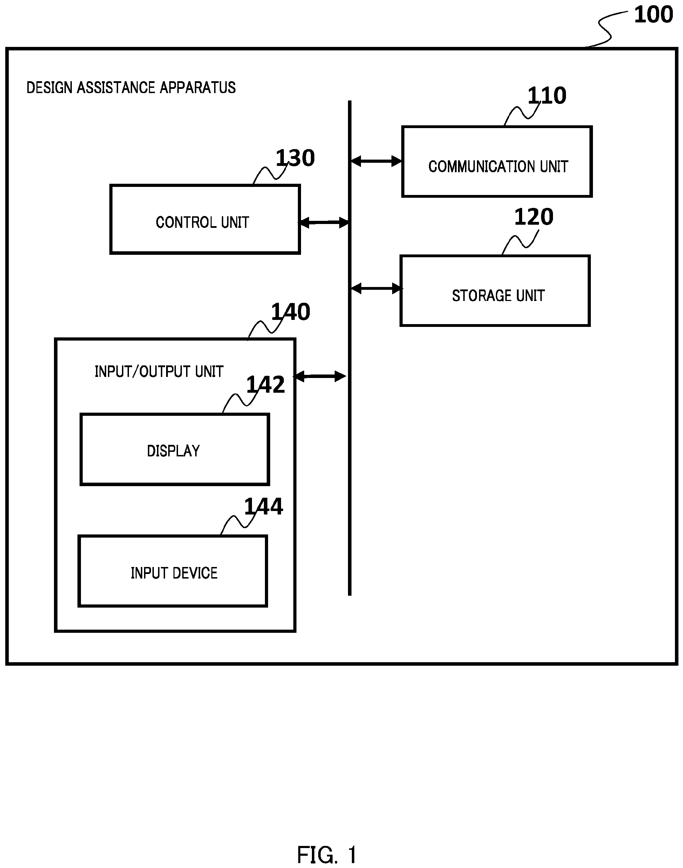

A design assistance apparatus 100 (see the figures such as FIG. 1) according to the present embodiment generally has a function of receiving design requirements (such as a design space for forming a structure and a characteristic shape of a flow path) for a structure including a partition wall structure that forms a desired flow path configuration which a user desires to design, and a function of generating the structure having such a flow path configuration based on the above design requirements.

The design assistance apparatus 100 receives a user input relating to the design requirements for the structure. A user can input the design requirements for the structure, by operating an input unit of the design assistance apparatus 100 to input numerical values for various design requirements, or by operating the input unit to perform operations of selecting a primitive shape element (such as a point, a line, and a three-dimensional shape) and specifying a shape, a size, and an arrangement position of the primitive shape element. Further, based on the design requirements for the structure inputted as described above, the design assistance apparatus 100 generates a flow path configuration having the specified shape and size such that the flow path configuration is formed at the specified arrangement position within the specified design space.

According to the design assistance apparatus 100 of the present embodiment, it is possible to design a flow path configuration having one or more flow paths with a desired arrangement and shape by inputting the configuration of a flow path desired to be formed and a design space for forming the flow path, thereby increasing the degree of freedom in designing of the flow path configuration.

Next, the configuration of the design assistance apparatus 100 according to the embodiment of the present disclosure will be described.

FIG. 1 is a functional block diagram of a design assistance apparatus according to an embodiment of the present disclosure. As illustrated in FIG. 1, the design assistance apparatus 100 according to the present embodiment includes a communication unit 110, a storage unit 120, a control unit 130, and an input/output unit 140.

The communication unit 110 is a communication interface for communicating with a terminal (not shown) different from the design assistance apparatus 100 through a communication network. Such a communication interface can adopt various communication protocols such as, for example, the transmission control protocol/internet protocol (TCP/IP).

The storage unit 120 stores various data such as an operating system (OS) program, various computer programs for causing the control unit 130 to execute various control processes and operations described in the present embodiment, input data from the input/output unit 140, generated data generated by processing in the control unit 130, and communication contents with other terminals. The storage unit 120 may store in advance primitive shape elements (such as a point, lines, and three-dimensional shapes such as a prism, a pyramid, a cylinder, a cone, and a sphere) used for inputting the design requirements of the structure (the design space of the structure, the characteristic shape of a flow path, and the like).

The storage unit 120 preferably includes a non-volatile storage medium whose storage state would be maintained if the design assistance apparatus 100 is powered off. For example, the storage unit 120 includes a non-volatile storage such as a hard disk drive (HDD), a solid state drive (SSD), an optical disk storage such as a compact disk (CD), a digital versatile disk (DVD), or a Blu-ray disk (BD), a non-volatile random access memory (NVRAM), an erasable programmable read-only memory (EPROM), or a flash memory. In addition, the storage unit 120 may further include a volatile storage such as a static random access memory (SRAM), but at least the computer programs described above is stored in the non-volatile (non-transitory) storage medium included in the storage unit 120.

Further, the storage unit 120 can store various data or programs such as data for graphically expressing selection items and other items that constitute a screen displayed on a display 142 of the input/output unit 140, text data necessary to display each piece of information that constitutes the screen, layout determination data for determining a layout of the screen, and a program for updating stored information based on entries.

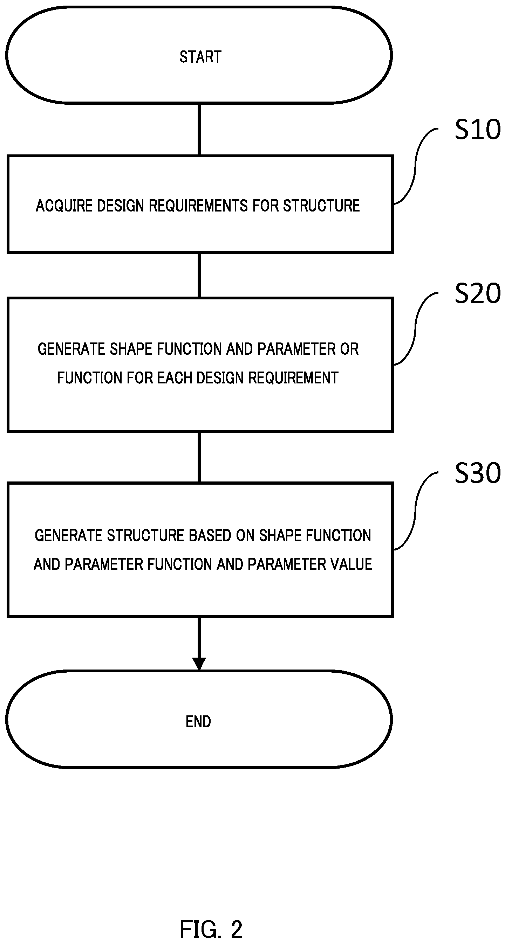

The control unit 130 controls the entire operation of the design assistance apparatus 100 by executing the computer programs stored in the storage unit 120 and, in particular, operates to realize the functions of the design assistance apparatus 100 as will be described with reference to FIGS. 2, 3, 5, and 11. The control unit 130 consists of, for example, a central processing unit (CPU), a graphics processing unit (GPU), a general purpose computing on GPU (GPGPU), an application-specific integrated circuit (ASIC), an embedded processor, a microprocessor, a digital signal processor (DSP), or a combination thereof. The control unit 130 may consist of a single processor or two or more processors.

The input/output unit 140 includes a display 142 as an output unit and an input device 144 as an input unit. Any form of display device such as a display monitor, a computer tablet device (including such a computer tablet device having a touch panel type display), or a projector can be used for the display 142. The input device 144 can be composed of, for example, a keyboard, a pointing device such as a mouse or a joystick, a touch panel, or a combination thereof. When the display 142 is a touch panel type display device, its touch panel can also be used as the input device 144.

Next, a design assistance method for a structure using the design assistance apparatus 100 according to the present embodiment will be described with reference to the figures such as FIG. 2. FIG. 2 is a flowchart illustrating a design assistance method for a structure using the design assistance apparatus according to the present embodiment.

In the design assistance method for the structure using the design assistance apparatus 100 according to the present embodiment, the control unit 130 of the design assistance apparatus 100, first of all, acquires information on the design requirements for the structure by the user input (step S10).

In step S10, the control unit 130 of the design assistance apparatus 100 causes the display 142 of the input/output unit 140 to display a user interface (UI) screen for receiving an input relating to the design requirements for the structure by a user's using the input device 144 of the input/output unit 140, and receives an input by the user using the input device 144. The control unit 130 of the design assistance apparatus 100 presents setting items described below as an example of the design requirements for the structure, in the UI screen displayed on the display 142, in the form of a pull-down menu or in another form. The user can input a selected setting item by selecting a desired setting item from the setting items presented in the UI screen.

(1) Design space of a structure
(2) Characteristic shape of a flow path
(3) Parameter or function that determines a generation area and a thickness of a partition wall structure
(4) Characteristic shape of a wall part to be formed around a partition wall structure
(5) Parameter or function that determines a generation area and a thickness of a wall part

The respective setting items relating to the design requirements for the structure will be now described.

The "design space of a structure" is a design requirement item for specifying a design space of a structure including a partition wall structure forming a partition wall that separates two or more mutually different flow paths or flow path spaces. This item "design space of a structure" includes information defining a space in which the structure is formed (for example, three-dimensional shape of the design space, and dimensions of each part of the three-dimensional shape). The design space of the structure can be specified, for example, by drawing a three-dimensional shape having a desired shape and size by the user input via the input device 144 in the UI screen displayed on the display 142 by the control unit 130 of the design assistance apparatus 100. Such drawing of the three-dimensional shape can be done, for example, by the control unit 130's causing options of primitive three-dimensional shape elements (such as a cylinder, a prism, a cone, and a sphere) to be displayed on the display 142 and by a user's selecting a desired three-dimensional shape element through the input device 144. Further, regarding the drawing of the three-dimensional shape, it is also possible to draw any more complicated design space by appropriately modifying, for example, the size and shape of each of a plurality of three-dimensional shape elements in the UI screen displayed on the display 142 by the control unit 130 and combining them, the plurality of three-dimensional shape elements being selected by the user using the input device 144. Alternatively, the user can define the design space by using the input device 144 to describe functions for determining the desired three-dimensional shape on the UI screen.

The "characteristic shape of a flow path" is a design requirement item for specifying the shape of each flow path to be formed within the design space. The specifying of the characteristic shape of the flow path can be done, for example, by the control unit 130's causing options of primitive three-dimensional shape elements (such as a point, various lines, various surfaces, and various three-dimensional shapes) to be displayed on the display 142 and by the user's selecting a desired three-dimensional shape element through the input device 144. Alternatively, the user can specify the characteristic shape of the flow path by using the input device 144 to describe a function for determining the desired characteristic shape of the flow path on the UI screen.

The "parameter or function that determines a generation area and a thickness of a partition wall structure" is a design requirement item for specifying the generation area of the partition wall structure to be formed within the design space of a specified structure and the thickness of the partition wall that separates between different flow paths. When the parameter is determined in advance, the user can specify these requirements by inputting that parameter value from the UI screen on the display 142 using the input device 144. Alternatively, the user can also specify these requirements by selecting or describing a parameter or function. In this case, it is possible to adopt a method in which selectable functions are stored in advance in the storage unit 120 of the design assistance apparatus 100 and the user specifies these requirements by selecting a desired function in the UI screen on the display 142 using the input device 144, or a method in which the user specifies these requirements by describing the function on the UI screen using the input device 144, for example.

The "characteristic shape of a wall part to be formed around a partition wall structure" is a design requirement item for specifying the characteristic shape of a wall part when the wall part is formed in at least a part around the partition wall structure. The specifying of the characteristic shape of the wall part can also be done, for example, by the control unit 130's causing options of primitive three-dimensional shape elements (such as a point, various lines, various surfaces, and various three-dimensional shapes) to be displayed on the display 142 and by the user' selecting a desired three-dimensional shape element through the input device 144. Alternatively, the user can specify the characteristic shape of the wall part by using the input device 144 to describe a function for determining the desired characteristic shape of the wall part on the UI screen.

Further, the "parameter or function that determines a generation area and a thickness of a wall part" is a design requirement item for specifying the generation area of the wall part to be formed around the partition wall structure and the thickness of the wall part. The user can specify the "parameter or function that determines a generation area and a thickness of a wall part" by operating the input device 144 to input or select the parameter or function in the same manner as the "parameter or function that determines a generation area and a thickness of a partition wall structure" described above.

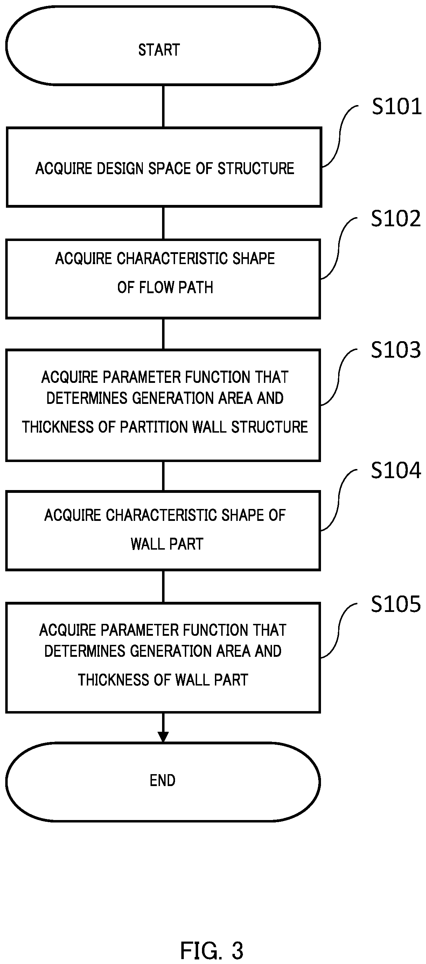

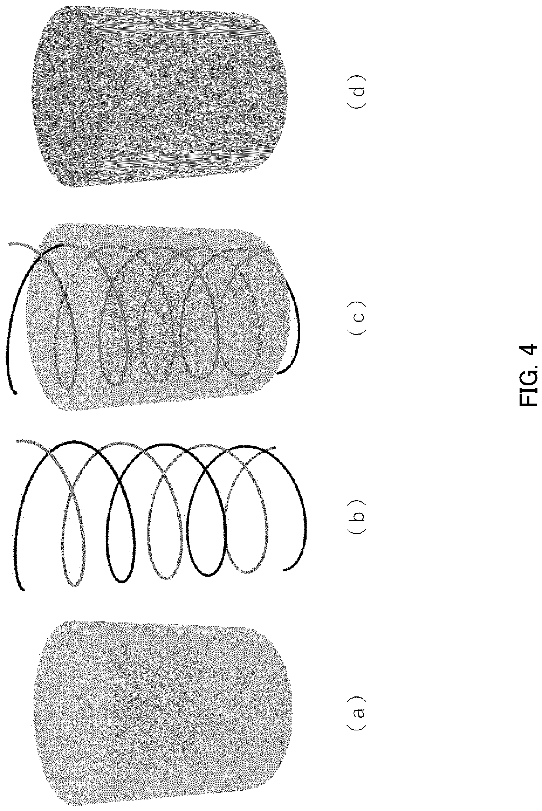

The process of specifying design requirements for generating a structure in which a partition wall structure comprising a spiral structure that separates two spiral flow paths is accommodated within a hollow cylindrical wall part, will be now described with reference to the flowchart illustrated in FIG. 3 as an example of the processing of step S10. FIG. 3 is a flowchart illustrating an example of the processing executed in step S10 in the flowchart illustrated in FIG. 2. FIG. 4 is a diagram illustrating examples of geometric shapes specified as respective design requirements.

First, in step S101 in FIG. 3, the control unit 130 of the design assistance apparatus 100 acquires information on the "design space of a structure." In the present example, the user uses the input device 144 to provide the user input of specifying a cylinder as illustrated in FIG. 4(a) and, in addition, to input the respective dimensions of diameter and height of the cylinder, as a three-dimensional shape for specifying the "design space of a structure," on the UI screen. This causes the design space to be specified and then the control unit 130 acquires it. Regarding the inputting of these dimensions, the respective dimensions of the diameter and height of the cylinder can be specified, for example, by dragging a certain edge of the cylinder displayed in the UI screen with the input device 144 (a pointer such as a mouse) and moving the pointer in this dragged state to change the diameter and length of the cylinder, in a manner similar to adjusting the size and shape of a so-called bounding box. Alternatively, the respective dimensions of the diameter and height of the cylinder can be specified by inputting parameters and parameter values relating to the respective dimensions of the diameter and height of the cylinder.

Next, in step S102, the control unit 130 of the design assistance apparatus 100 acquires information on the "characteristic shape of a flow path." In the present example, the user uses the input device 144 to specify two spiral curves, a first spiral curve (indicated by a dark gray line) and a second spiral curve (indicated by a light gray line) as illustrated in FIG. 4(b), as the "characteristic shape of a flow path," on the UI screen. The first spiral curve specifies the characteristic shape of a first flow path, and the second spiral curve specifies the characteristic shape of a second flow path. The characteristics of these spiral curves including the diameter and helical pitch of each spiral curve and the relative arrangement position between the spiral curves can be specified by, for example, inputting a shape function of each spiral curve through the input device 144.

Next, in step S103, regarding the "parameter or function that determines a generation area and a thickness of a partition wall structure," the present example assumes that a parameter or function that determines a generation area and a thickness of a partition wall structure is specified such that a flow path characteristic shape is arranged within the cylindrical design space specified as described above as illustrated in FIG 4(c).

Further, in step S104, the present example assumes that a hollow cylinder as illustrated in FIG. 4(d) is specified, as the "characteristic shape of a wall part to be formed around a partition wall structure."

Further, in step S105, the "parameter or function that determines a generation area and a thickness of a wall part" is specified. An example of the characteristic shape of the wall part can be a cylindrical shape with the same diameter as the cylindrical shape that specifies the design space of the partition wall structure, but with the top surface and the bottom surface omitted. In this case, a wall part generation range parameter or function can be determined such that the wall part is generated to the outside from the cylindrical surface of that cylindrical shape within a range of a constant distance to set a thickness t of the wall part, for example. For the wall part generation range, a parameter may be determined such that a wall part of any shape is generated in at least a part on the outside of the cylindrical surface, or a parameter or function may be determined such that the wall part changes. Alternatively, another example of the characteristic shape of the wall part may include a hollow cylinder with the same length as the cylinder that specifies the design space of the partition wall structure, but with a larger diameter than that. In the latter example, the parameter or function can be specified by the user's operation in the UI screen on the display 142 using the input device 144 such that the cylinder specifying the design space of the partition wall structure and the cylinder specifying the characteristic shape of the wall part are disposed overlapping each other in a concentric arrangement. In this case, a difference in diameter between the cylinder specifying the design space and the cylinder specifying the characteristic shape of the wall part is specified as the thickness of the wall part.

Note that the order of the respective processes in the flowchart of the processing illustrated in FIG. 3 is not limited to the above-described order, and may be any other order that does not cause the respective processes to interfere with each other.

Next, the control unit 130 of the design assistance apparatus 100 executes the process of generating the shape function and the parameter or function relating to each design requirement specified as described above, and stores the generated shape function and parameter or function in the storage unit 120 (step S20).

For the shape function, functions relating to the characteristic shape of the flow path and the characteristic shape of the wall part are generated. Further, for the parameter or function, parameters or functions relating to the design space of the structure, the position and thickness of the partition wall structure, and the position and thickness of the wall part are generated. Note that when the respective design requirements are specified by the user's inputting the shape functions and the parameters or functions relating to the characteristic shapes of the flow paths and the wall parts in the UI screen on the display 142 using the input device 144, these inputted parameters or functions are stored in the storage unit 120.

Next, the control unit 130 of the design assistance apparatus 100 generates the structure based on the shape function and the parameter function and parameter value that specify the respective design requirement, acquired in the above step S20 (step S30).

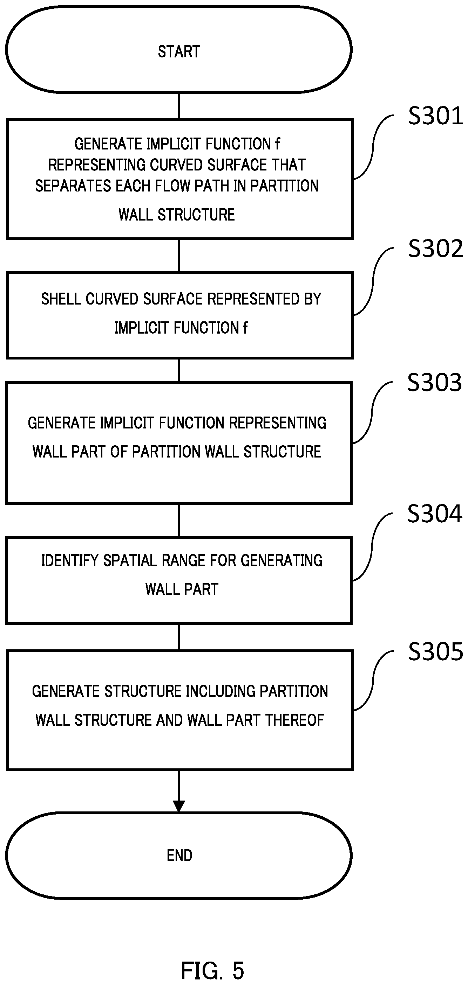

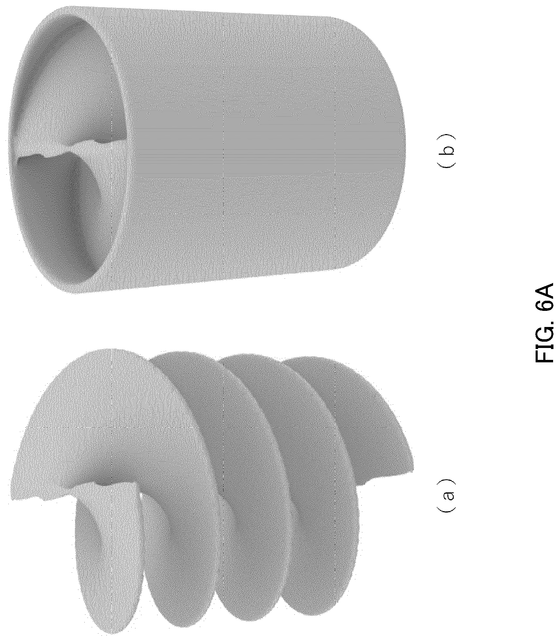

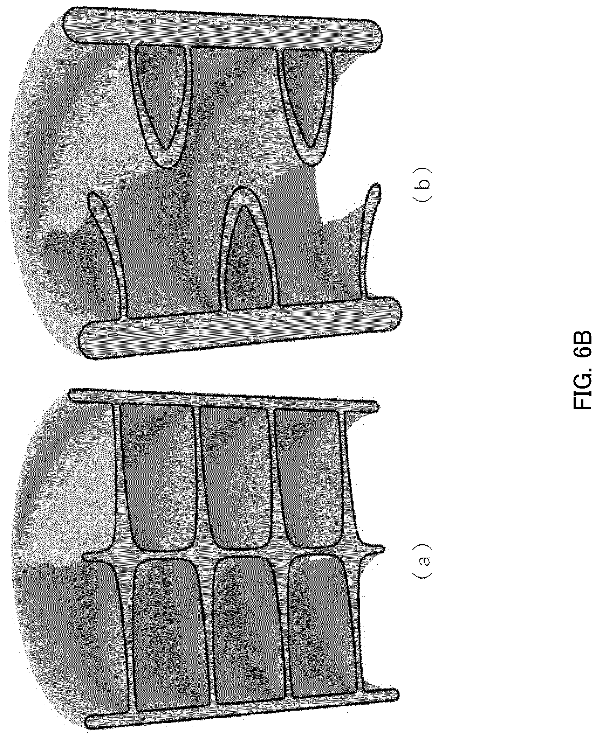

Here, in the present example, a process of generating a structure including a partition wall structure comprising a double spiral structure that separates two spiral flow paths and a hollow cylindrical wall part accommodating that partition wall structure, based on the design requirements specified as described above, will be described with reference to the flowchart illustrated in FIG. 5. FIG. 5 is a flowchart illustrating an example of the processing executed in step S30 in the flowchart illustrated in FIG. 2. FIGS. 6A and 6B are diagrams illustrating configurations relating to a structure generated in the present embodiment.

First, in step S301 in FIG. 5, the control unit 130 of the design assistance apparatus 100 generates, as an implicit function representing a curved surface that separates respective flow paths in the partition wall structure, an implicit function $f$ that takes characteristic shape $s_i$ and spatial coordinates $(x, y, z)$ of each flow path as arguments. The characteristic shape $s_i$ of each flow path is defined by an implicit function relating to the characteristic shape of each flow path generated in the above step S102.

In the present example, to generate the partition wall structure including the two flow paths, implicit functions $g_1$ and $g_2$ are defined for the respective two flow paths, and an implicit function $f(x, y, z, s_1, s_2)$ representing a curved surface that separates these two flow paths is generated by taking the difference between the implicit functions $g_1$ and $g_2$, for example. The implicit function $f(x, y, z, s_1, s_2)$ is represented by, for example, the following Equation (1).

$$f(x, y, z, s_1, s_2) = g_1(x, y, z, s_1) - g_2(x, y, z, s_2) - d(x, y, z) \dots \text{Equation (1)}$$

Here, $g_1(x, y, z, s_1)$ is an implicit function representing a distance between a point $(x, y, z)$ in space and a point (closest point) on the flow path characteristic shape $s_1$ closest to the point $(x, y, z)$, $g_2(x, y, z, s_2)$ is an implicit function representing a distance between a point $(x, y, z)$ in space and a point (closest point) on the flow path characteristic shape $s_2$ closest to the point $(x, y, z)$, and $d(x, y, z)$ is a parameter function that determines a position of a curved surface generated by the implicit function $f$ from the respective characteristic shapes.

The parameter function $d(x, y, z)$ in the above Equation (1) will be described in more detail. When $d(x, y, z) = 0$, the curved surface is generated in between a first flow path having the characteristic shape $s_1$ and a second flow path having the characteristic shape $s_2$. In contrast, compared to the position of the curved surface generated when $d(x, y, z)=0$, the position of the curved surface generated when $d(x, y, z)<0$ is close to the first flow path having the characteristic shape $s_1$, and consequently the volume of the first flow path per unit volume becomes smaller, and the volume of the second flow path having the characteristic shape $s_2$ becomes larger. In contrast, the position of the curved surface generated when $d(x, y, z)$ >0 is close to the second flow path having the characteristic shape $s_2$, and consequently the volume of the first flow path per unit volume becomes larger, and the volume of the second flow path having the characteristic shape $s_2$ becomes smaller. Thus, depending on the setting of the parameter function $d(x, y, z)$, the position of the curved surface generated by the implicit function f can be changed, and the ratio of the volumes of the separated flow paths per unit volume can be changed. The parameter function $d(x, y, z)$ may be constant over the whole of the partition wall structure to be generated, or may be varied continuously or stepwise over the whole or part of the partition wall structure.

Next, in step S302, the control unit 130 gives a thickness t to the curved surface represented by the implicit function $f(x, y, z, s_1, s_2)$ generated as described above to shell the curved surface. The shelled curved surface is represented by the following Equation (2). The thickness t of the curved surface is determined based on the parameter or function that determines a generation area and a thickness of a partition wall structure, specified in the above-described step S103.

$$\text{Shell}(f(x, y, z, s_1, s_2), t(x, y, z)) = |f(x, y, z, s_1, s_2)| - t(x, y, z) \dots \text{Equation (2)}$$

Thus, the curved surface comprising a set of points equidistant from the respective characteristic shapes $s_1$ and $s_2$ of the two flow paths is modified in accordance with the parameter function d, so that the curved surface separating the two flow paths is generated at a position determined by the parameter function d, and then, this curved surface is given the thickness t, so that the partition wall structure separating these two flow paths is generated. FIG. 6A(a) illustrates a partition wall structure of the present example generated by the control unit 130 in the above-described steps. According to the present example, a partition wall structure comprising a spiral partition wall that separates two spiral flow paths from each other is generated.

Subsequently, in step S303, the control unit 130 generates, as an implicit function representing the wall part of the partition wall structure, an implicit function f (x, y, z, g) that takes characteristic shape g and spatial coordinates (x, y, z) of the wall part as arguments. The characteristic shape g of the wall part is defined by an implicit function relating to the characteristic shape of the wall part generated in the above step S20. In the present example, the implicit function f (x, y, z, g) representing the wall part can represent, for example, a distance from the peripheral surface of the cylinder that specifies the design space of the partition wall structure.

Next, in step S304, the control unit 130 specifies a value range of the implicit function f (x, y, z, g) representing the wall part to identify a spatial range for generating the wall part. For example, it is possible to specify a generation range of the wall part such that the generation range has the same height as the cylinder specifying the design space of the partition wall structure and surrounds the entire circumference of that cylinder, or specify a generation range of the wall part only in its part. The value range of the implicit function f (x, y, z, g) representing the wall part is defined based on the parameter or function that determines a generation area and a thickness of a wall part, specified in the above-described step S105.

Finally, in step S305, the control unit 130 generates the wall part to be formed for the partition wall structure that has been generated as described above, and generates a structure including the partition wall structure and this generated wall part. FIG. 6A(b) illustrates a structure of the present example generated through the above-described steps by the control unit 130. The structure of the present example includes the partition wall structure generated as described above and a hollow cylindrical wall part surrounding that partition wall structure. FIG. 6B(a) is a cross-sectional view of the structure taken along a plane passing through the central axis of the structure illustrated in FIG. 6A(b). As illustrated in FIG. 6B(a), the structure of the present example has the first spiral flow path and the second spiral flow path separated from it defined by the partition wall structure and the wall part around it.

Further, FIG. 6B(b) is a cross-sectional view of a structure generated based on parameters or functions different from the parameters or functions specified to generate the structure including the partition wall structure and the wall part described in FIG. 6A(b) and FIG. 6B(a). The structure illustrated in FIG. 6B(b) has, compared to the structure illustrated in FIG. 6A(b) and FIG. 6B(a), the portions near the central axis of the partition wall structure excluded from the arrangement position of the partition wall, and the thickness of the wall part increased.

Thus, according to the design assistance apparatus 100 of the present embodiment, specifying the flow path configuration having the two or more desired flow paths desired to be formed within the design space and the parameters or functions required for its generation makes it possible to generate the partition wall structure that separates those two or more flow paths from each other. Further, since the flow paths of the specified flow path configuration can be of any shape, it is possible to increase the degree of design freedom for the structure including the partition wall structure, compared to the known methods of generating a structure based on an existing periodic minimal surface. Consequently, when a partition wall structure to be generated is used, for example, in a heat exchange application, it is possible to design a structure having desired characteristics under a high degree of freedom, considering the heat exchange characteristics (such as pressure loss and heat transfer rate) of the partition wall structure to be generated.

**Examples**

Next, examples in which other structures are generated by the design assistance apparatus 100 of the present embodiment will be described.

**Example 1**

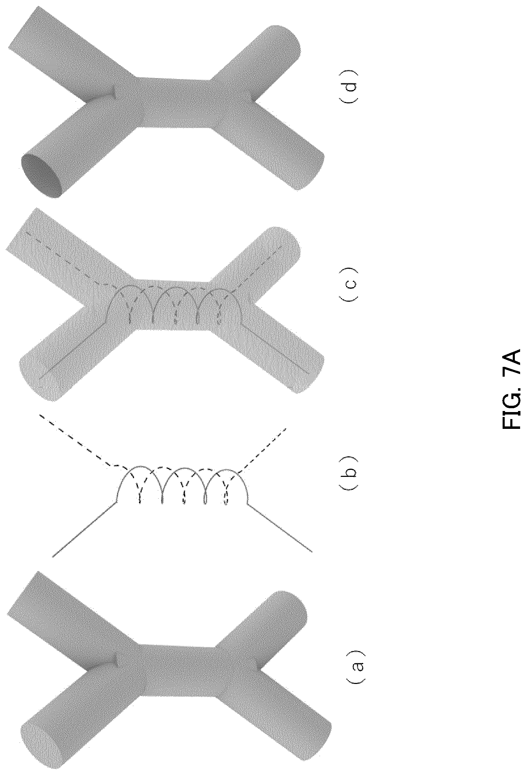

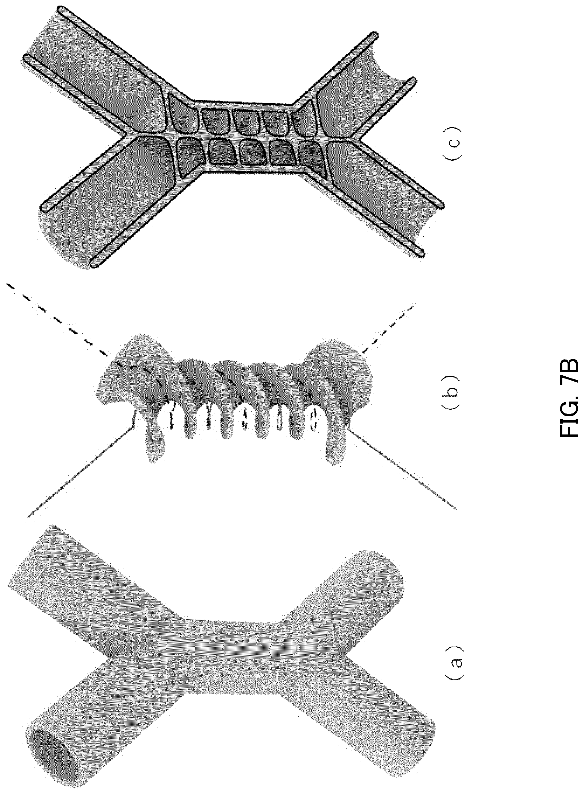

Example 1 describes a variation of the structure having the spiral partition wall structure illustrated in FIGS. 6A and 6B and describes an example of generating a structure including conduits serving as an inlet and an outlet to each flow path in the structure illustrated in FIGS. 6A and 6B. FIG. 7A is a diagram illustrating examples of the geometric shape specified as each design requirement in Example 1, and FIG. 7B is a diagram illustrating configurations relating to the structure generated in Example 1.

Also in the present example, the control unit 130 of the design assistance apparatus 100 acquires the user input relating to the design requirements for the structure as described below, in the above-described step S10 (steps S101 to S105).

For the three-dimensional shape specifying the "design space of a partition wall structure," a central cylinder, two cylinders extending upward in two directions from the central cylinder, and two cylinders extending downward in two directions from the central cylinder are specified as illustrated in FIG. 7A(a).

For the "characteristic shape of a flow path," two spiral curves, which are a first spiral curve (indicated by a solid line) and a second spiral curve (indicated by a broken line) as illustrated in FIG. 7A(b), are specified. The first spiral curve specifies the characteristic shape of the first flow path, and the second spiral curve specifies the characteristic shape of the second flow path. Each of the two spiral curves illustrated in FIG. 7A(b) has, on its upper and lower portions, linear extensions comprising the conduits serving as the inlet and the outlet to each flow path.

Regarding the "parameter or function that determines a generation area and a thickness of a partition wall structure," the present example specifies the parameter or function that determines the generation area and thickness of the partition wall structure such that the flow path characteristic shape is positioned as illustrated in FIG. 7A(c) within the design space specified as described above.

Further, for the "characteristic shape of a wall part to be formed around a partition wall structure," a hollow cylinder in the central part, two hollow cylinders extending upward in two directions from the hollow cylinder in the central part, and two hollow cylinders extending downward in two directions from the hollow cylinder in the central part are specified as illustrated in FIG. 7A(d). Each hollow cylinder has its top surface and bottom surface omitted. Further, the "parameter or function that determines a generation area and a thickness of a wall part" is specified. The diameter of each cylinder defining the characteristic shape of the wall part can be the same as that of the corresponding cylinder among the cylinders forming the design space of the partition wall structure. In this case, the wall part generation range parameter or function can be determined such that the wall part is generated to the outside from the cylindrical surface of each cylinder within a range of a constant distance to set a thickness t of the wall part, for example.

In the present example, based on the design requirements inputted as described above, the control unit 130 of the design assistance apparatus 100 executes the process of generating the shape function and the parameter or function relating to each design requirement in the above-described step S20, and generates the structure based on the shape function and the parameter function and parameter value that specify each design requirement in the above-described step S30 (steps S301 to S305).

FIG. 7B(a) is a perspective view of the structure generated by the present example, and FIG. 7B(b) is a perspective view illustrating a partition wall structure included in the structure illustrated in FIG. 7B(a). FIG. 7B(b) overlaps and illustrates the "characteristic shape of a flow path" specified as illustrated in FIG. 7A(b).

According to the present example, the structure including the conduits serving as the inlet and the outlet of each flow path on both of the upper and lower sides of the partition wall structure that separates the two spiral flow paths is generated as illustrated in FIG. 7B(a), based on the "characteristic shape of a flow path" specified as illustrated in FIG. 7A(b). The partition wall structure of the present example is formed in a shape in which the upper and lower portions of the partition wall smoothly connect each spiral flow path to the upper and lower linear flow paths, as illustrated in FIG. 7B(b).

**Example 2**

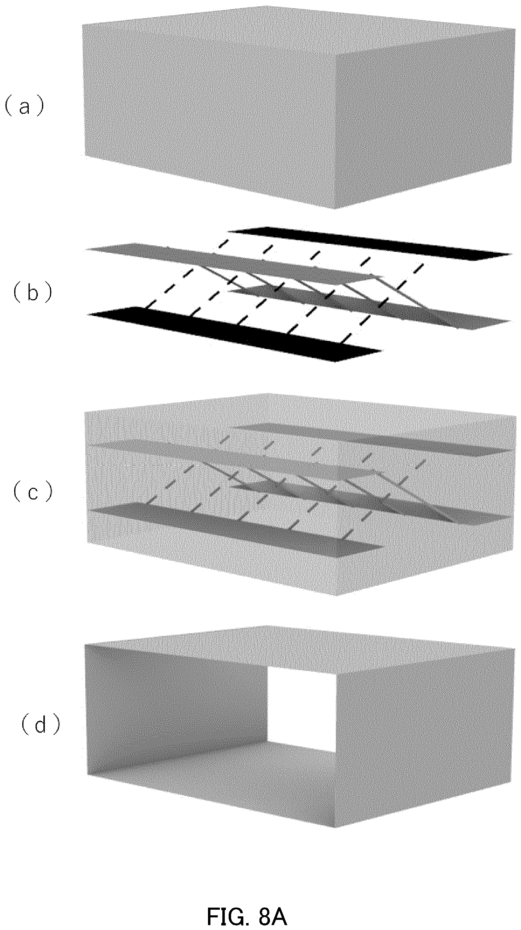

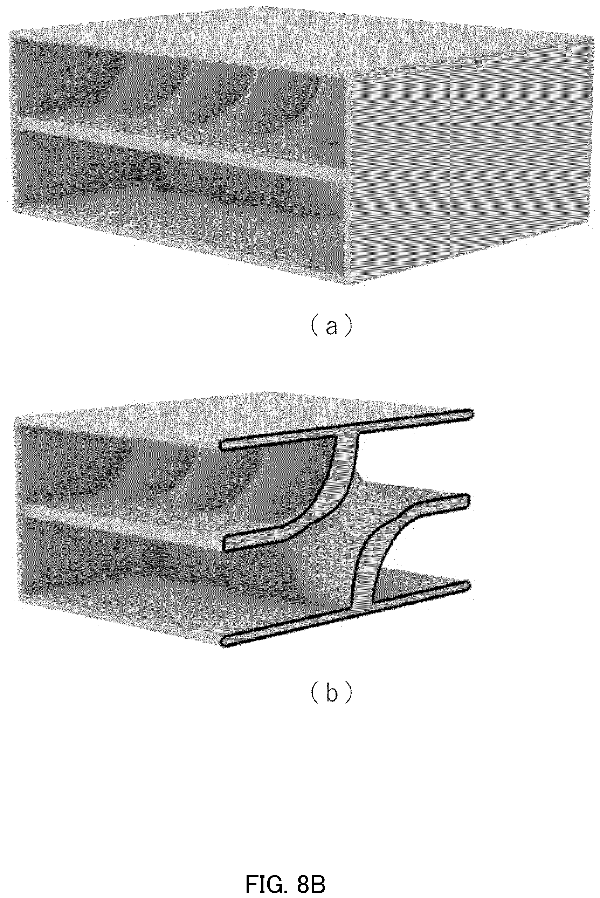

Example 2 describes an example of generating a structure including a partition wall structure in which two flow paths linearly intersect each other. FIG. 8A is a diagram illustrating examples of the geometric shape specified as each design requirement in Example 2, and FIG. 8B is a diagram illustrating configurations relating to the structure generated in Example 2.

Also in the present example, the control unit 130 of the design assistance apparatus 100 acquires the user input relating to the design requirements for the structure as described below, in the above-described step S10 (steps S101 to S105).

For the three-dimensional shape specifying the "design space of a partition wall structure," a cuboid is specified as illustrated in FIG. 8A(a).

For the "characteristic shape of a flow path,", faces that specify a flow path space on the upper near side in the figure and another flow path space on the lower far side in the figure, and straight lines (indicated by a solid line) that specify a plurality of first flow paths communicating between these faces, as well as faces that specify a flow path space on the lower near side in the figure and another flow path space on the upper far side in the figure, and straight lines (indicated by a broken line) that specify a plurality of second flow paths communicating between these faces, are specified as illustrated in FIG. 8A(b). The straight lines that specify the plurality of first flow paths and the straight lines that specify the plurality of second flow paths are disposed to alternately intersect with each other.

Regarding the "parameter or function that determines a generation area and a thickness of a partition wall structure," the present example specifies the parameter or function that determines the generation area and thickness of the partition wall structure such that the flow path characteristic shape is positioned as illustrated in FIG. 8A(c) within the design space specified as described above.

Further, for the "characteristic shape of a wall part to be formed around a partition wall structure," a shape with the same outer dimensions as the cuboid that specifies the design space of the partition wall structure, but with the face on the near side and the face on the far side omitted, is specified as illustrated in FIG. 8A(d). Further, the "parameter or function that determines a generation area and a thickness of a wall part" is specified. In this example, in specifying that parameter or function, the wall part generation range parameter or function can be determined such that the wall part is generated to the outside from each surface of the characteristic shape of the wall part within a range of a constant distance to set a thickness t of the wall part, as an example.

In the present example, based on the design requirements inputted as described above, the control unit 130 of the design assistance apparatus 100 executes the process of generating the shape function and the parameter or function relating to each design requirement in the above-described step S20, and generates the structure based on the shape function and the parameter or function that specify each design requirement in the above-described step S30 (steps S301 to S305).

FIG. 8B(a) is a perspective view of the structure generated by the present example, and FIG. 8B(b) is a perspective view illustrating the structure illustrated in FIG. 8B(a) in a broken state.

According to the present example, the structure including the partition wall structure in which the plurality of first flow paths and the plurality of second flow paths that each communicate the corresponding upper and lower flow path spaces linearly intersect with each other, is generated as illustrated in FIG. 8B(a) and FIG. 8B(b), based on the "characteristic shape of a flow path" specified as illustrated in FIG. 8A(b).

**Example 3**

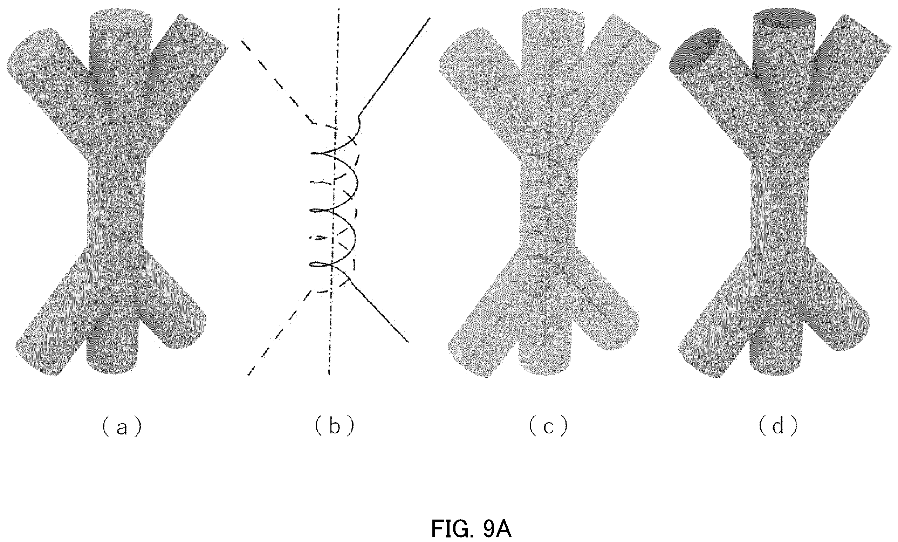

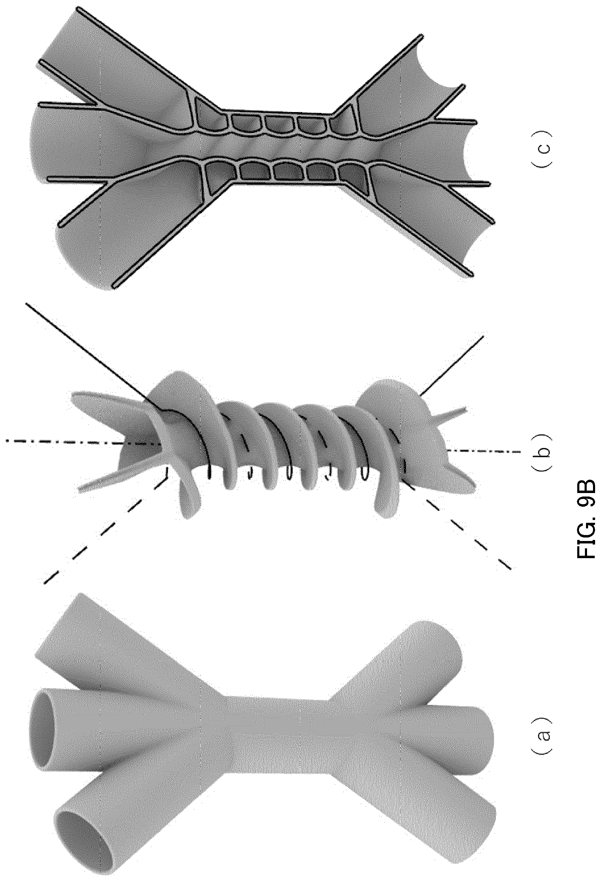

Example 3 describes a variation of the structure illustrated in FIG. 7B(a) and describes an example of generating a structure including three flow paths unlike the structure including the two flow paths illustrated in FIG. 7B(a). FIG. 9A is a diagram illustrating examples of the geometric shape specified as each design requirement in Example 3, and FIG. 9B is a diagram illustrating configurations relating to the structure generated in Example 3.

Also in the present example, the control unit 130 of the design assistance apparatus 100 acquires the user input relating to the design requirements for the structure as described below, in the above-described step S10 (steps S101 to S105).

For the three-dimensional shape specifying the "design space of a partition wall structure," a central cylinder, two cylinders extending upward from the central cylinder so as to branch off in two directions, and two cylinders extending downward from the central cylinder so as to branch off in two directions are specified as illustrated in FIG. 9A(a).

For the "characteristic shape of a flow path," two spiral curves, which are a first spiral curve (indicated by a broken line) and a second spiral curve (indicated by a solid line) as illustrated in FIG. 9A(b), and a straight line (indicated by a dash-dotted line) extending along the central axis of the two spiral curves, are specified. The first spiral curve specifies the characteristic shape of the first flow path, the second spiral curve specifies the characteristic shape of the second flow path, and the straight line specifies the characteristic shape of the third flow path. Each of the two spiral curves illustrated in FIG. 9A(b) has, on its upper and lower portions, linear extensions comprising conduits serving as an inlet and an outlet to each flow path.

Regarding the "parameter or function that determines a generation area and a thickness of a partition wall structure," the present example specifies the parameter or function that determines the generation area and thickness of the partition wall structure such that the flow path characteristic shape is positioned as illustrated in FIG. 9A(c) within the design space specified as described above.

Further, for the "characteristic shape of a wall part to be formed around a partition wall structure," a hollow cylinder in the central part, two hollow cylinders extending upward from the hollow cylinder in the central part so as to branch off in two directions, and two hollow cylinders extending downward from the hollow cylinder in the central part so as to branch off in two directions are specified as illustrated in FIG. 9A(d). Each hollow cylinder has its top surface and bottom surface omitted. Further, the "parameter or function that determines a generation area and a thickness of a wall part" is specified. The diameter of each cylinder defining the characteristic shape of the wall part can be the same as that of the corresponding cylinder among the cylinders forming the design space of the partition wall structure. In this case, the wall part generation range parameter or function can be determined such that the wall part is generated to the outside from the cylindrical surface of each cylinder within a range of a constant distance to set a thickness t of the wall part, for example.

In the present example, based on the design requirements inputted as described above, the control unit 130 of the design assistance apparatus 100 executes the process of generating the shape function and the parameter or function relating to each design requirement in the above-described step S102, and generates the structure based on the shape function and the parameter function and parameter value that specify each design requirement in the above-described step S30 (steps S301 to S305).

In the present example, in step S301 in step S30, the control unit 130 of the design assistance apparatus 100 generates an implicit function f $(x, y, z, s_1, s_2, s_3)$ representing a curved surface that separates the three flow paths. This implicit function f is represented by, for example, the following Equation (3).

$$f(x, y, z, s_1, s_2, s_3) = min(|g_1 - min(g_2, g_3) - d_1(x, y, z)|, |g_2 - min(g_1, g_3) - d_2(x, y, z)|) \dots$$

Equation (3)

Here, $g_1(x, y, z, s_1)$ is an implicit function representing a distance between a point $(x, y, z)$ in space and a point (closest point) on the characteristic shape $s_1$ of the first flow path closest to the point $(x, y, z)$, $g_2(x, y, z, s_2)$ is an implicit function representing a distance between a point $(x, y, z)$ in space and a point (closest point) on the characteristic shape $s_2$ of the second flow path closest to the point $(x, y, z)$, $g_3(x, y, z, s_2)$ is an implicit function representing a distance between a point $(x, y, z)$ in space and a point (closest point) on the characteristic shape $s_3$ of the third flow path closest to the point $(x, y, z)$, and $d_1(x, y, z)$ and $d_2(x, y, z)$ are each a parameter function that determines a position of a curved surface generated by the implicit function f from each characteristic shape.

Note that when a complex structure including n flow paths (three or more) is generated in this way, a generalized implicit function f as represented in the following Equation (4) may be generated and used for generating the structure.

$$f(x, y, z, s_1, s_2, s_3., s_n) = min(|g_1 - min(g_2, g_3., g_n) - dil, |g_2 - min(g_1, g_3., g_n) - d_2|.., |g_{n-1} - min(g_1, g_2, g_3., g_{n-2}, g_n) - d_{n-1}|)$$ Equation (4)

Next, in step S302 in step S30, the control unit 130 gives a thickness t to the curved surface represented by the implicit function f $(x, y, z, s_1, s_2, s_3)$ generated as described above to shell the curved surface. The shelled curved surface is represented by the following Equation (5).

$$Shell(f(x, y, z, s_1, s_2, s_3), t(x, y, z)) = |f(x, y, z, s_1, s_2, s_3)| - t(x, y, z) \dots Equation (5)$$

FIG. 9B(a) is a perspective view of the structure generated by the present example, FIG. 9B(b) is a perspective view illustrating a partition wall structure included in the structure illustrated in FIG. 9B(a), and FIG. 9B(c) is a perspective view illustrating the structure illustrated in FIG. 9B(a) in a broken state.

According to the present example, based on the "characteristic shape of a flow path" specified as illustrated in FIG. 9A(b), the curved surface comprising points equidistant from the "characteristic shape $s_1$" and the "characteristic shape obtained by combining characteristic shape $s_2$ and characteristic shape $s_3$," which are defined from the characteristic shapes $s_1$, $s_2$, and $s_3$ of the three flow paths, is modified by the parameter function $d_1$, and the curved surface comprising points equidistant from the "characteristic shape $s_2$" and the "characteristic shape obtained by combining characteristic shape $s_1$ and characteristic shape $s_3$," which are also defined from the characteristic shapes $s_1$, $s_2$, and $s_3$ of the three flow paths, is modified by the parameter function $d_2$, so that the curved surface separating the three flow paths is generated at a position determined by the parameter functions $d_1$ and $d_2$. Further, this curved surface is given the thickness t, so that the partition wall structure separating these three flow paths (see FIG. 9B(b)) is generated. Furthermore, the wall part is additionally generated for this partition wall structure, so that the structure including the three flow paths, namely, the two spiral flow paths and the linear flow path extending along the central axis of the two spiral flow paths, is generated as illustrated in FIG. 9B(a) and FIG. 9B(c).

**Example 4**

The examples of the structures generated by the design assistance apparatus 100 of the present embodiment have been described with reference to the above-described examples. Structures that can be generated by the design assistance apparatus 100 are not limited to the structures exemplified above. For example, the design assistance apparatus 100 of the present embodiment can also generate structures having more complex flow path configurations, such as a structure in which a plurality of flow paths alternately disposed in a lattice shape are separated from each other, and a structure comprising a distributor having a plurality of flow paths extending in any direction from a certain flow path space.

The present example describes an example of generating a structure comprising a heat exchanger including a plurality of first flow paths and a plurality of second flow paths, as one of the structures having more complex flow path configurations.

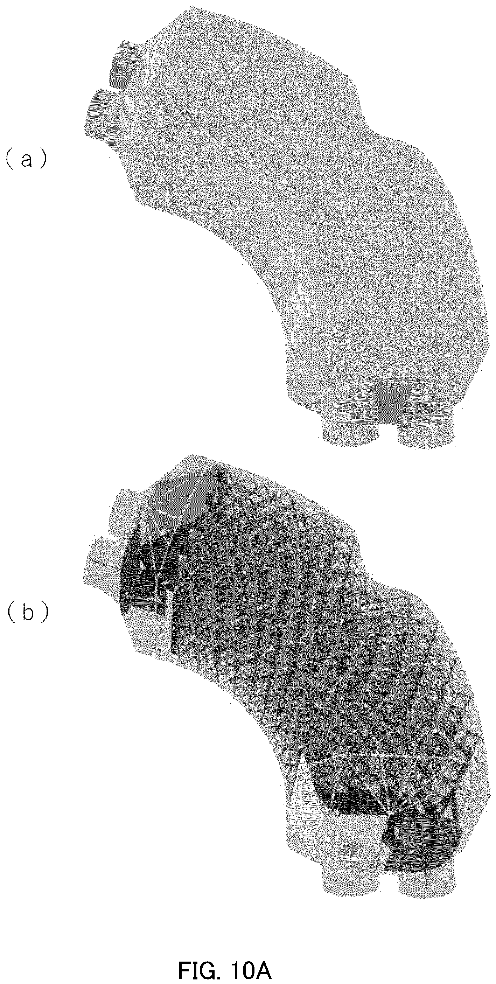

In this example, the design requirements are specified within the design space illustrated in FIG. 10A(a) such that a partition wall structure forming flow paths specified by the characteristic shape illustrated in FIG. 10A(b) is generated in the generation area illustrated in FIG. 10A(b), in the above-described step S10 (steps S101 to S105). In the characteristic shape illustrated in FIG. 10A(b), the plurality of first flow paths (indicated by dark gray lines) communicating with each other and the plurality of second flow paths (indicated by light gray lines) communicating with each other are specified by lines; an area where a fluid flowing in the plurality of first flow paths is distributed and collected is specified by surfaces (dark gray); an area where a fluid flowing in the plurality of second flow paths is distributed and collected is specified by surfaces (light gray); and openings communicating with each area are specified by lines (dark gray lines and light gray lines).

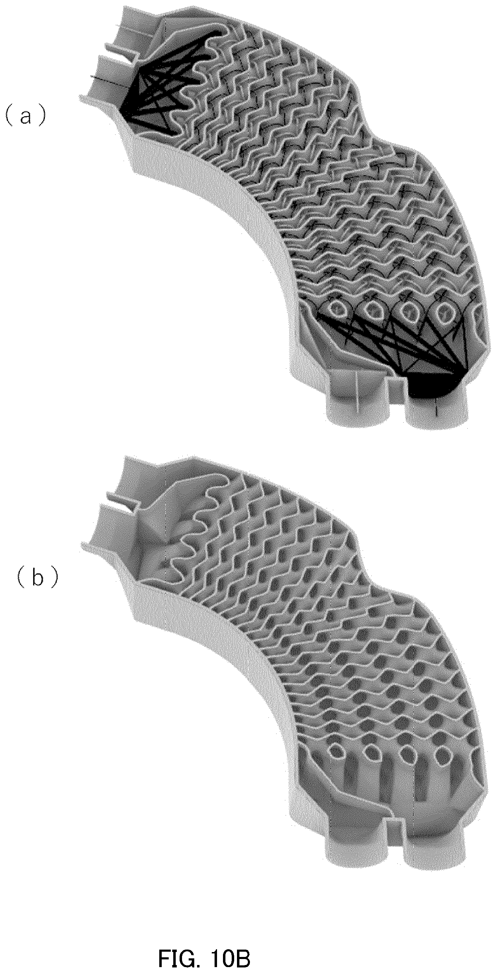

Based on the design requirements thus specified, the control unit 130 of the design assistance apparatus 100 generates the structure serving as the heat exchanger including the flow path configuration as illustrated in the cross-sectional perspective views of FIG. 10B(a) and FIG. 10(b) through the processes of the above-described steps S20 and S30 (steps S301 to S305). FIG. 10B(a) illustrates the flow path characteristic shape illustrated in FIG. 10A(b) and the generated flow path configuration in a superimposed manner, and FIG. 10B(b) illustrates only the generated flow path configuration. According to this heat exchanger, it is possible to perform heat exchange between a first fluid and a second fluid by causing the first fluid to flow from one opening to the other opening which communicate with the plurality of first flow paths and simultaneously the second fluid to flow from one opening to the other opening which communicate with the plurality of second flow paths.

**Other Embodiments**

Another embodiment of the present disclosure will be described. The other embodiment of the present disclosure relates to a method for manufacturing the structure designed by the design assistance apparatus described in the above embodiment. According to the present embodiment, the structure designed by the design assistance apparatus is manufactured by shaping apparatuses such as 3D printers, various molding devices including injection molding machines, and processing devices.

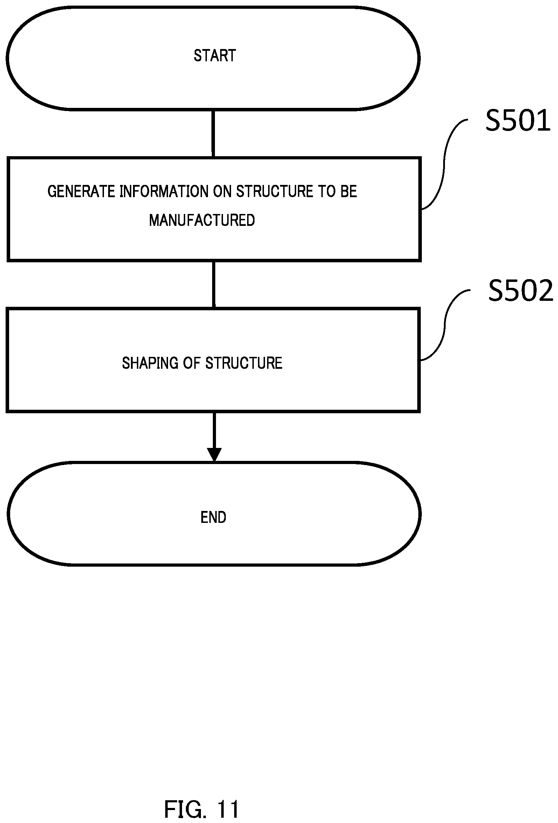

FIG. 11 is a flowchart illustrating a method for manufacturing a structure.

In the processing in the present embodiment, first, the design assistance apparatus 100 described with reference to FIG. 1 in Embodiment 1 is used to execute the design assistance method described with reference to FIGS. 2, 3, and 5 to generate information on a structure to be manufactured (step S501).

The generation of the information on the structure to be manufactured includes, for example, identifying the characteristics of the structure to be manufactured including the shape, the dimensions of each part, and the material, and generating data such as three-dimensional data of the structure to be manufactured. The information (such as the three-dimensional data) on the structure to be manufactured is preferably data in a format with which, when the shaping apparatus described below receives the information from the design assistance apparatus 100, the shaping apparatus can shape the structure based on the information on the structure.

Then, the design assistance apparatus 100 causes the shaping apparatus to execute the shaping of the structure based on the information on the structure to be manufactured generated in step S501 (step S502).

The design assistance apparatus 100 can communicate with the shaping apparatus (not shown) through the communication unit 110, and the information (such as three-dimensional data) on the structure to be manufactured generated by the design assistance apparatus 100 in step S501 is transmitted to the shaping apparatus through the communication unit 110. The shaping apparatus executes the shaping of the structure based on the information (such as three-dimensional data) on the structure to be manufactured received from the communication unit 110.

The shaping of the structure by the shaping apparatus includes shaping of the structure by any method with reference to the information on the structure acquired from the design assistance apparatus 100. For example, the method may be, but not limited to, at least one of the following.

- Cutting
- Molding
- 3D printing
- ·Stereolithography using photocurable resin
- ·Injection molding
- ·Powder compression molding
- ·Laser processing

Note that, while in the above-described example the design assistance apparatus 100 performs the processes from the process of searching for a structure to be manufactured to the process of shaping the structure, it is also possible to adopt a configuration in which the design assistance apparatus 100 performs the process of generating data such as three-dimensional data of the structure to be manufactured and another information processing apparatus performs the process of shaping the structure. In this case, information on the structure to be manufactured generated by the design assistance apparatus 100 may be provided by any means (via a communication network or via a physical storage medium) to another information processing apparatus connected to a shaping apparatus (such as a 3D printer, a molding apparatus, or a processing apparatus) that shapes the structure, and the shaping process may be performed by the other information processing apparatus based on the information on the structure.

While the present disclosure has been described with reference to the embodiments and variations disclosed herein, the embodiments and variations are not intended to limit the invention according to the scope of the claims. Further, any combination of the features described in the embodiments and variations of the present disclosure shall be also included in the technical scope of the present disclosure.

**Claims**

1. A design assistance apparatus for designing a structure including a partition wall structure that separates a plurality of flow paths from each other, the design assistance apparatus comprising a processor configured to execute:

   acquiring design space information that specifies a design space of the structure;
   acquiring flow path characteristic shape information that specifies a characteristic shape of each flow path to be formed within the design space, the flow path characteristic shape information being identified by a line or a surface; and
   generating a boundary surface that separates the plurality of flow paths from each other within the design space, based on the design space information and the flow path characteristic shape information.

2. The design assistance apparatus according to claim 1, wherein the generating the boundary surface includes generating an implicit function representing the boundary surface based on the flow path characteristic shape information and generating the boundary surface based on the implicit function.

3. The design assistance apparatus according to claim 2, wherein the generating the boundary surface includes generating the boundary surface at a position identified by a function indicating a distance from each characteristic shape.

4. The design assistance apparatus according to claim 2, wherein the processor is further configured to give a thickness to the boundary surface.

5. The design assistance apparatus according to claim 2, wherein the processor is further configured to generate a wall part in at least a part of a peripheral surface of the partition wall structure.

6. A design assistance method for designing a structure including a partition wall structure that separates a plurality of flow paths from each other by using an apparatus comprising a processor, the method comprising:

   acquiring design space information that specifies a design space of the structure;
   acquiring flow path characteristic shape information that specifies a characteristic shape of each flow path to be formed within the design space, the flow path characteristic shape information being identified by a line or a surface; and
   generating a boundary surface that separates the plurality of flow paths from each other within the design space, based on the design space information and the flow path characteristic shape information.

7. A program for causing a processor of a computer to execute a design assistance method for designing a structure including a partition wall structure that separates a plurality of flow paths from each other, the method comprising:

acquiring design space information that specifies a design space of the structure;

acquiring flow path characteristic shape information that specifies a characteristic shape of each flow path to be formed within the design space, the flow path characteristic shape information being identified by a line or a surface; and

generating a boundary surface that separates the plurality of flow paths from each other within the design space, based on the design space information and the flow path characteristic shape information.

8. A method for manufacturing a structure including a partition wall structure that separates a plurality of flow paths from each other by using an apparatus comprising a processor, the method comprising:

acquiring design space information that specifies a design space of the structure;

acquiring flow path characteristic shape information that specifies a characteristic shape of each flow path to be formed within the design space, the flow path characteristic shape information being identified by a line or a surface;

generating a boundary surface that separates the plurality of flow paths from each other within the design space, based on the design space information and the flow path characteristic shape information;

giving a thickness to the boundary surface to generate the partition wall structure; and

causing a shaping apparatus to execute a shaping process for the generated partition wall structure.

**100**

DESIGN ASSISTANCE APPARATUS

**110**

COMMUNICATION UNIT

**130**

CONTROL UNIT

**120**

STORAGE UNIT

**140**

INPUT/OUTPUT UNIT

**142**

DISPLAY

**144**

INPUT DEVICE

FIG. 1

START

ACQUIRE DESIGN REQUIREMENTS FOR STRUCTURE

S10

GENERATE SHAPE FUNCTION AND PARAMETER OR
FUNCTION FOR EACH DESIGN REQUIREMENT

S20

GENERATE STRUCTURE BASED ON SHAPE FUNCTION
AND PARAMETER FUNCTION AND PARAMETER VALUE

S30

END

FIG. 2

```
┌─────────────────────────────┐
│            START            │
└─────────────────────────────┘
              │
              │                        S101
┌─────────────────────────────┐
│ ACQUIRE DESIGN SPACE OF STRUCTURE │
└─────────────────────────────┘
              │
              │                        S102
┌─────────────────────────────┐
│   ACQUIRE CHARACTERISTIC SHAPE   │
│         OF FLOW PATH            │
└─────────────────────────────┘
              │
              │                        S103
┌─────────────────────────────┐
│  ACQUIRE PARAMETER FUNCTION THAT  │
│  DETERMINES GENERATION AREA AND   │
│ THICKNESS OF PARTITION WALL STRUCTURE │
└─────────────────────────────┘
              │
              │                        S104
┌─────────────────────────────┐
│   ACQUIRE CHARACTERISTIC SHAPE OF  │
│           WALL PART             │
└─────────────────────────────┘
              │
              │                        S105
┌─────────────────────────────┐
│  ACQUIRE PARAMETER FUNCTION THAT  │
│  DETERMINES GENERATION AREA AND   │
│      THICKNESS OF WALL PART      │
└─────────────────────────────┘
              │
              ▼
┌─────────────────────────────┐
│            END              │
└─────────────────────────────┘
```

FIG. 3

（a）　　　　　（b）　　　　　（c）　　　　　（d）

FIG. 4

START

GENERATE IMPLICIT FUNCTION f
REPRESENTING CURVED SURFACE THAT
SEPARATES EACH FLOW PATH IN PARTITION
WALL STRUCTURE

S301

SHELL CURVED SURFACE REPRESENTED BY
IMPLICIT FUNCTION f

S302

GENERATE IMPLICIT FUNCTION REPRESENTING
WALL PART OF PARTITION WALL STRUCTURE

S303

IDENTIFY SPATIAL RANGE FOR GENERATING
WALL PART

S304

GENERATE STRUCTURE INCLUDING PARTITION
WALL STRUCTURE AND WALL PART THEREOF

S305

END

FIG. 5

(a)   (b)

FIG. 6A

( a )

( b )

FIG. 6B

（a）　（b）　（c）　（d）

FIG. 7A

( a )   ( b )   ( c )

FIG. 7B

(a)

(b)

(c)

(d)

FIG. 8A

（a）

（b）

FIG. 8B

FIG. 9A

(a)   (b)   (c)   (d)

（a）　　　　　　　（b）　　　　　　　（c）

FIG. 9B

（a）

（b）

FIG. 10A

(a)

(b)

FIG. 10B

```
          ┌─────────────────────────┐
          │          START          │
          └────────────┬────────────┘
                       │
          ┌────────────┴────────────┐
          │ GENERATE INFORMATION ON │        S501
          │ STRUCTURE TO BE         │
          │ MANUFACTURED            │
          └────────────┬────────────┘
                       │
          ┌────────────┴────────────┐
          │   SHAPING OF STRUCTURE  │        S502
          └────────────┬────────────┘
                       │
                       ▼
          ┌─────────────────────────┐
          │           END           │
          └─────────────────────────┘
```

FIG. 11

## INTERNATIONAL SEARCH REPORT

| International application No. |
|---|
| **PCT/JP2023/022357** |

| A. | CLASSIFICATION OF SUBJECT MATTER |
|---|---|

*G06F 30/10*(2020.01)i
FI: G06F30/10 100

According to International Patent Classification (IPC) or to both national classification and IPC

| B. | FIELDS SEARCHED |
|---|---|

Minimum documentation searched (classification system followed by classification symbols)

G06F30/10 - G06F30/398

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus (JDreamIII); IEEE Xplore

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2020/0150623 A1 (AUTODESK, INC.) 14 May 2020 (2020-05-14) entire text, all drawings | 1-8 |
| A | US 2021/0349065 A1 (EMISSOL LLC) 11 November 2021 (2021-11-11) entire text, all drawings | 1-8 |
| A | JP 2002-351857 A (KEIO UNIVERSITY) 06 December 2002 (2002-12-06) entire text, all drawings | 1-8 |
| A | JP 2022-74564 A (JTEKT CORP.) 18 May 2022 (2022-05-18) entire text, all drawings | 1-8 |

☐ Further documents are listed in the continuation of Box C.    ✓ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 August 2023** | **29 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/022357**

| Patent document cited in search report | | | Publication date (day/month/year) | Patent family member(s) | | | Publication date (day/month/year) |
|---|---|---|---|---|---|---|---|
| US | 2020/0150623 | A1 | 14 May 2020 | EP | 3877890 | A1 | |
| | | | | entire text, all drawings | | | |
| | | | | CN | 113196273 | A | |
| US | 2021/0349065 | A1 | 11 November 2021 | EP | 4149676 | A1 | |
| | | | | entire text, all drawings | | | |
| | | | | KR | 10-2023-0008762 | A | |
| | | | | CN | 116033957 | A | |
| JP | 2002-351857 | A | 06 December 2002 | (Family: none) | | | |
| JP | 2022-74564 | A | 18 May 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200033070
- US 10704841 B